# FASCICULE DE BREVET EUROPEEN

(11) **EP 3 898 051 B1**
(45) Date de publication et mention de la délivrance du brevet: **27.03.2024**
(21) Numéro de dépôt: 19842756.9
(22) Date de dépôt: 19.12.2019
(51) Int. Cl.: B23H 7/08, C22C 9/04, C23C 28/02

(54) **FIL ELECTRODE A LAITON EN PHASE DELTA POUR USINAGE PAR ELECTROEROSION, ET PROCEDE POUR SA FABRICATION**
DELTA-PHASE-MESSINGELEKTRODENDRAHT FÜR FUNKENEROSIONSBEARBEITUNG UND VERFAHREN ZU SEINER HERSTELLUNG
DELTA-PHASE BRASS ELECTRODE WIRE FOR ELECTROEROSION MACHINING, AND METHOD FOR MANUFACTURING SAME

(30) Priorité: 21.12.2018 FR 1873971
(43) Date de publication de la demande: 27.10.2021
(73) Titulaire: THERMOCOMPACT, 74370 Epagny Metz-Tessy (FR)
(72) Inventeur: LY, Michel, 74000 Annecy (FR); SANCHEZ, Gérald, 74230 Dingy-Saint-Clair (FR)
(74) Mandataire: Cabinet Poncet
(86) Numéro de dépôt international: PCT/IB2019/061104
(87) Numéro de publication internationale: WO 2020/128953

(56) Documents cités:
- FR-A1- 2 936 727
- DATABASE INSPEC [Online] THE INSTITUTION OF ELECTRICAL ENGINEERS, STEVENAGE, GB; novembre 1971 (1971-11), LENZ J ET AL: "Some vacancy- and stacking variants of the beta brass structural family", XP002795599, Database accession no. 338025 cité dans la demande & ZEITSCHRIFT FUR METALLKUNDE WEST GERMANY, vol. 62, no. 11, 1 janvier 1971 (1971-01-01), pages 810-816, ISSN: 0044-3093
- MUKHOPADHYAY N K ET AL: "Synthesis and characterization of nano-structured Cu-Zn @c-brass alloy", MATERIALS SCIENCE AND ENGINEERING: A, ELSEVIER, AMSTERDAM, NL, vol. 485, no. 1-2, 25 juin 2008 (2008-06-25), pages 673-680, XP022618099, ISSN: 0921-5093, DOI: 10.1016/J.MSEA.2007.10.039 [extrait le 2007-10-24]
- DATABASE INSPEC [Online] THE INSTITUTION OF ELECTRICAL ENGINEERS, STEVENAGE, GB; November 1971 (1971-11), LENZ J ET AL: "Some vacancy- and stacking variants of the beta brass structural family", Database accession no. 338025 & ZEITSCHRIFT FUR METALLKUNDE WEST GERMANY, vol. 62, no. 11, 1 November 1971 (1971-11-01), pages 810-816, ISSN: 0044-3093

## Description

### DOMAINE TECHNIQUE DE L'INVENTION

La présente invention concerne les fils électrodes utilisés pour couper des métaux ou des matériaux conducteurs de l'électricité, par électroérosion dans une machine d'usinage par électroérosion.

Le procédé bien connu d'usinage par électroérosion, ou étincelage érosif, permet d'enlever de la matière sur une pièce conductrice de l'électricité, en générant des étincelles dans une zone d'usinage entre la pièce à usiner et un fil électrode conducteur de l'électricité. Le fil électrode défile en continu au voisinage de la pièce dans le sens de la longueur du fil, tenu par des guidages, et il est déplacé progressivement dans le sens transversal en direction de la pièce, soit par translation transversale des guidages du fil, soit par translation de la pièce.

Un générateur électrique, connecté au fil électrode par des contacts électriques à l'écart de la zone d'usinage, établit une différence de potentiel appropriée entre le fil électrode et la pièce conductrice à usiner. La zone d'usinage entre le fil électrode et la pièce est plongée dans un fluide diélectrique approprié. La différence de potentiel provoque entre le fil électrode et la pièce à usiner l'apparition d'étincelles qui érodent progressivement la pièce et le fil électrode. Le défilement longitudinal du fil électrode permet de conserver en permanence un diamètre de fil suffisant pour éviter sa rupture dans la zone d'usinage. Le déplacement relatif du fil et de la pièce dans le sens transversal permet de découper la pièce ou de traiter sa surface, le cas échéant.

Les particules détachées du fil électrode et de la pièce par les étincelles se dispersent dans le fluide diélectrique, où elles sont évacuées.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'usinage et limiter l'amplitude des vibrations.

La plupart des machines d'usinage par électroérosion modernes sont conçues pour utiliser des fils métalliques, généralement de 0,25 mm de diamètre, et de charge à rupture comprise entre 400 et 1 000 N/mm².

Lorsqu'une étincelle se produit entre le fil électrode et la pièce, la surface du fil électrode se trouve brusquement échauffée à une très haute température pendant une brève durée. Il en résulte que la matière de la couche superficielle du fil électrode, à l'endroit de l'étincelle, passe de l'état solide à l'état liquide ou gazeux, et se trouve déplacée à la surface du fil électrode et/ou évacuée dans le fluide diélectrique. On constate que la zone de surface du fil électrode atteinte par l'étincelle a été déformée, prenant généralement une forme légèrement concave en cratère, avec des zones où la matière a été fondue et à nouveau solidifiée.

On a pu constater que l'efficacité des étincelles en ce qui concerne l'électroérosion dépend en grande partie de la nature et de la topographie de la couche superficielle du fil électrode. Pour cela, des progrès considérables d'efficacité d'électroérosion ont été obtenus en utilisant des fils électrodes comportant une âme en un ou plusieurs métaux ou alliages assurant une bonne conduction du courant électrique et une bonne résistance mécanique pour tenir la charge mécanique de tension du fil, et comportant un revêtement en un ou plusieurs autres métaux ou alliages et/ou une topographie particulière, par exemple des fractures, assurant une meilleure efficacité de l'électroérosion, par exemple une plus grande vitesse d'érosion.

On a ainsi proposé des fils électrodes ayant une âme en laiton recouverte de zinc, le zinc ayant la propriété de s'évaporer rapidement lors de l'étincelle en évitant simultanément un échauffement excessif de l'âme du fil électrode. Par exemple le document FR 2 936 727 A décrit un fil électrode comprenant une âme métallique, en une ou plusieurs couches de métal ou d'alliage métallique, et un revêtement ayant un alliage différent de celui de l'âme métallique et contenant plus de 50 % en poids de zinc. Le document décrit des revêtements en phase delta d'alliage zinc-fer ou d'alliage zinc-nickel. La phase delta de ces alliages est stable à température ambiante, ce qui facilite leur obtention. La vitesse d'usinage de tels fils électrodes n'est toutefois pas optimale.

Par ailleurs, on a proposé des fils électrodes dont l'âme est recouverte d'une ou plusieurs couches d'alliages de cuivre et de zinc, par exemple une couche superficielle d'alliage de cuivre et de zinc en phase gamma fracturée surmontant une couche intermédiaire d'alliage de cuivre et de zinc en phase bêta, ou encore une couche superficielle d'alliage de cuivre et de zinc en phase epsilon qui surmonte une couche d'alliage de cuivre et de zinc en phase gamma elle-même surmontant une couche d'alliage de cuivre et de zinc en phase bêta. Cette structure particulière de revêtement vise à assurer généralement une plus grande vitesse d'usinage d'une pièce par électroérosion.

II reste cependant encore un besoin d'augmenter la vitesse d'usinage par électroérosion, pour une intensité électrique d'étincelage donnée.

La présente invention résulte d'observations selon lesquelles, lors de son passage dans la zone d'usinage d'une machine d'électroérosion où se déroule un procédé d'électroérosion, une même surface du fil électrode reçoit généralement plusieurs étincelles successives. Il en résulte que, après une première étincelle affectant ladite surface du fil électrode, une étincelle ultérieure se produit sur une surface qui a été modifiée par ladite première étincelle et les autres étincelles intermédiaires. Autrement dit, les étincelles modifient progressivement la surface du fil électrode, ce qui peut affecter l'efficacité des étincelles ultérieures en ce qui concerne notamment la vitesse d'électroérosion.

En particulier, une première étincelle a non seulement pour action d'éroder la surface du fil électrode et la surface de la pièce à usiner, mais également de modifier localement le revêtement du fil électrode par la fusion et la recomposition de la matière. Ainsi, la matière superficielle du revêtement, qui a été recomposée, est généralement un alliage de cuivre et de zinc dans une phase qui diffère de celle de la couche superficielle du fil électrode dans son état initial, qui ne présente donc plus les mêmes propriétés en ce qui concerne l'électroérosion produite par les étincelles ultérieures.

De même, une première étincelle a non seulement pour action d'éroder la surface du fil électrode et la surface de la pièce à usiner, mais également de modifier localement la topographie du revêtement du fil électrode par la fusion de la matière qui peut s'écouler et recouvrir d'éventuelles fractures ou cavités qui étaient présentes à la surface du fil électrode dans son état initial.

Ainsi, l'idée qui est à la base de l'invention est de préserver une couche superficielle de fil électrode ayant une bonne efficacité érosive tout au long de son parcours dans la zone d'usinage lors de l'usinage par électroérosion, en réduisant autant que possible la dégradation de cette efficacité par les étincelles successives d'usinage. De cette façon, une zone de surface du revêtement du fil électrode peut conserver une bonne efficacité érosive pendant une partie plus longue de son parcours dans la zone d'usinage où se produisent les étincelles d'électroérosion.

### EXPOSE DE L'INVENTION

Un problème proposé par la présente invention est de concevoir un fil électrode dont la structure permet d'augmenter la vitesse d'usinage par électroérosion, pour une intensité électrique d'étincelage donnée.

Un autre problème proposé par l'invention est de fabriquer de façon économique un tel fil d'électroérosion qui permet une plus grande vitesse d'usinage par électroérosion pour une intensité électrique d'étincelage donnée.

Pour atteindre ces objets ainsi que d'autres, selon un premier aspect, l'invention propose un fil électrode pour usinage par électroérosion, ledit fil électrode comprenant :
- une âme métallique, en une ou plusieurs couches de métal ou d'alliage métallique,
- sur l'âme métallique, un revêtement ayant un alliage différent de celui de l'âme métallique et contenant plus de 50 % en poids de zinc, dans lequel le revêtement comprend des zones en alliage cuivre-zinc en phase delta.

Le fil électrode pour usinage par électroérosion, lorsqu'il est stocké puis transporté jusqu'à être prêt pour un usinage à l'entrée d'une machine d'électroérosion, se trouve à température ambiante, c'est-à-dire une température généralement comprise entre 15 °C et 30 °C.

À ces températures, l'alliage cuivre-zinc en phase delta est dans un état métastable.

Les zones d'alliage cuivre-zinc en phase delta peuvent être présentes dans une couche continue de revêtement, ou dans un revêtement qui contient des fissures.

Les inventeurs de la présente invention ont constaté que, par rapport à des zones en mélange d'alliage de cuivre et de zinc en phase gamma et d'alliage de cuivre et de zinc en phase epsilon de même composition globale, quand elles sont soumises à une étincelle d'usinage, intense et de courte durée, les zones d'alliage cuivre-zinc en phase delta produisent moins de liquide. On peut observer, par exemple, que des cratères résultant des étincelles d'électroérosion ont moins de zones re-solidifiées quand la phase delta de cet alliage est présente dans le revêtement du fil électrode.

Lorsque la quantité de liquide produite est moindre, le fil électrode perd moins de matière pendant l'étincelle. Il est donc possible de réduire la vitesse de défilement du fil électrode, et donc la consommation de fil électrode, tout en conservant une bonne vitesse d'usinage.

D'autre part, quand la quantité de liquide produite est moindre, il y a moins de fractures ou pores qui se trouvent occultés par le flux de liquide, de sorte que la topographie de surface du fil électrode est mieux préservée. La vitesse d'usinage est ainsi augmentée.

Selon un premier mode de réalisation, dans le fil électrode selon l'invention, de l'alliage cuivre-zinc en phase delta forme au moins une couche d'alliage dans le revêtement.

Par exemple, ladite au moins une couche d'alliage cuivre-zinc en phase delta peut-être avantageusement une couche superficielle du revêtement. Elle est ainsi directement sollicitée par les étincelles d'électroérosion.

La couche d'alliage cuivre-zinc en phase delta peut être fracturée.

Selon une première possibilité, le revêtement du fil électrode peut comprendre une couche d'alliage cuivre-zinc en phase gamma fracturée surmontée par ladite au moins une couche d'alliage cuivre-zinc en phase delta.

Dans ce cas, ladite au moins une couche d'alliage cuivre-zinc en phase delta peut avantageusement avoir une épaisseur comprise entre 30 % et 100 % de l'épaisseur de ladite couche d'alliage de cuivre-zinc en phase gamma fracturée.

Selon une seconde possibilité, le revêtement peut comprendre une couche d'alliage de cuivre-zinc en phase bêta, surmontée par une couche d'alliage de cuivre-zinc en phase gamma fracturée, elle-même surmontée par ladite au moins une couche d'alliage de cuivre-zinc en phase delta, elle-même surmontée par une couche d'alliage cuivre-zinc en phase epsilon.

Selon un mode de réalisation avantageux, le fil électrode selon l'invention peut comprendre un revêtement ayant une couche d'alliage de cuivre-zinc en phase gamma contenant des pores couverts par ladite au moins une couche d'alliage de cuivre-zinc en phase delta.

De façon générale, la couche d'alliage cuivre-zinc en phase delta peut être continue. En alternative, la couche d'alliage cuivre-zinc en phase delta peut être fracturée (par tréfilage du fil électrode).

Selon un autre aspect, l'invention propose divers procédés pour fabriquer un fil électrode pour usinage par électroérosion, ledit fil électrode comprenant une âme métallique et un revêtement comprenant de l'alliage cuivre-zinc en phase delta. Ces divers procédés comprennent de façon générale les étapes suivantes :
(a)- prendre un fil d'ébauche en métal,
(b)- réaliser sur ce fil d'ébauche un revêtement ayant des zones dont la composition moyenne correspond à la plage (D) d'existence de l'alliage cuivre-zinc en phase delta,
(c)- porter le fil d'ébauche revêtu à une température comprise entre 559 °C et 700 °C, de préférence entre 559 °C et 600° C, température à laquelle la phase delta d'alliage cuivre-zinc est stable,
(d)- refroidir brutalement le fil d'ébauche revêtu de façon à maintenir l'alliage cuivre-zinc en phase delta dans un état métastable à température ambiante.

Selon un premier mode de réalisation, un tel procédé comprend les étapes suivantes :
- au cours de l'étape (a), choisir un fil d'ébauche ayant du cuivre en surface, par exemple en alliage de cuivre, ou en alliage de cuivre et de zinc,
- réaliser un premier revêtement de zinc sur ce fil d'ébauche,
- réaliser un premier traitement thermique de diffusion de façon à obtenir une sous-couche d'alliage de cuivre et de zinc en phase beta et une couche externe d'alliage de cuivre et de zinc en phase gamma,
- réaliser un second revêtement de zinc,
- réaliser un second traitement thermique de diffusion à température inférieure à 170 °C de façon à obtenir à la surface du fil une couche externe en alliage de cuivre et de zinc en phase epsilon tout en conservant les couches inférieures en alliages de cuivre et de zinc en phases bêta et gamma préalablement réalisées,
- porter le fil à une température comprise entre 559 °C et 700 °C, de préférence entre 559 °C et 600 °C, encore de préférence entre 595 °C et 598 °C, de façon à créer une couche intermédiaire en alliage cuivre-zinc en phase delta, comprise entre la sous-couche en alliage de cuivre et de zinc en phase gamma et la couche externe d'alliage de cuivre et de zinc en phase epsilon,
- refroidir brutalement le fil de façon à maintenir l'alliage cuivre-zinc en phase delta dans un état métastable à température ambiante.

Selon un second mode de réalisation, un tel procédé comprend les étapes suivantes :
- au cours de l'étape (a), choisir un fil d'ébauche ayant du cuivre en surface, par exemple en cuivre, en alliage de cuivre, ou en alliage de cuivre et de zinc,
- tremper ce fil d'ébauche dans un bain de zinc en fusion à une température comprise entre 559 °C et 700 °C, de préférence entre 559 °C et 600 °C, encore de préférence de 600 °C, de façon à créer un revêtement contenant un alliage de cuivre et de zinc en phase delta,
- refroidir brutalement le fil de façon à maintenir l'alliage de cuivre et de zinc en phase delta dans un état métastable.

Selon un troisième mode de réalisation, un tel procédé comprend les étapes suivantes :
- au cours de l'étape (a), choisir un fil d'ébauche en métal, par exemple en cuivre, en alliage de cuivre, ou en alliage de cuivre et de zinc,
- déposer à la surface du fil d'ébauche une couche de nickel d'environ 5 µm d'épaisseur,
- tremper ce fil d'ébauche revêtu de nickel dans un bain de cuivre et de zinc en fusion ayant une teneur en zinc comprise entre 72 % et 77 % atomiques et le complément en cuivre, et laissez diffuser à une température comprise entre 559 °C et 700 °C, de préférence entre 559 °C et 600 °C, encore de préférence de 600 °C, de façon à créer un revêtement en alliage de cuivre et de zinc en phase delta,
- refroidir brutalement le fil ainsi obtenu de façon à maintenir l'alliage de cuivre et de zinc en phase delta dans un état métastable à température ambiante.

Selon un quatrième mode de réalisation, un tel procédé comprend les étapes suivantes :
- au cours de l'étape (a), choisir un fil d'ébauche en métal, par exemple en cuivre, en alliage de cuivre, ou en alliage de cuivre et de zinc,
- déposer à la surface du fil d'ébauche une couche de nickel d'environ 5 µm d'épaisseur,
- coextruder ce fil d'ébauche revêtu de nickel avec un alliage de cuivre et de zinc ayant une teneur en zinc comprise entre 72 % et 77 % atomiques et maintenu à une température comprise entre 559 °C et 700 °C, de préférence à 600 °C, de façon à créer un revêtement ayant une couche en alliage de cuivre et de zinc en phase delta sur ce fil d'ébauche revêtu de nickel,
- refroidir brutalement le fil ainsi revêtu aussitôt après la coextrusion de façon à maintenir l'alliage de cuivre et de zinc en phase delta dans un état métastable à température ambiante.

Selon un cinquième mode de réalisation, un tel procédé comprend les étapes suivantes :
- au cours de l'étape (a), choisir un fil d'ébauche métallique, par exemple en cuivre, en alliage de cuivre, ou en alliage de cuivre et de zinc,
- déposer à la surface du fil d'ébauche métallique une couche de nickel d'environ 5 µm d'épaisseur,
- déposer sur la couche de nickel une couche de cuivre, puis une couche de zinc, dans des proportions entre le cuivre et le zinc comprises entre 72 % et 77 % atomiques de zinc, avec un excès de zinc choisi pour compenser l'évaporation inévitable d'une partie du zinc pendant l'étape ultérieure de diffusion,
- laissez diffuser à une température comprise entre 559 °C et 700 °C, de préférence entre 559 °C et 600 °C, encore de préférence de 600 °C, de façon à créer un revêtement ayant une couche en alliage cuivre-zinc en phase delta,
- refroidir brutalement le fil ainsi revêtu de façon à maintenir l'alliage cuivre-zinc en phase delta dans un état métastable à température ambiante.

Selon un sixième mode de réalisation, un tel procédé comprend les étapes suivantes :
- au cours de l'étape (a), choisir un fil d'ébauche en métal, par exemple un fil d'ébauche en cuivre, en alliage de cuivre, ou en alliage de cuivre de zinc, le fil d'ébauche étant destiné à constituer l'âme du fil d'électro érosion,
- au cours de l'étape (b), effectuer sur le fil d'ébauche, par électrodéposition en phase aqueuse, un revêtement de cuivre et de zinc dont la composition est celle de la phase delta,
- porter le fil à une température comprise entre 559 °C et 700 °C, de préférence entre 559 °C et 600 °C, encore de préférence entre 595 °C et 598 °C, de façon à créer un revêtement en alliage cuivre-zinc en phase delta,
- refroidir brutalement le fil ainsi revêtu de façon à maintenir l'alliage cuivre-zinc en phase delta dans un état métastable à température ambiante.

En pratique, pour effectuer l'étape (b) d'électrodéposition en phase aqueuse du revêtement de cuivre et de zinc dont la composition est celle de la phase delta, le fil d'ébauche constitue la cathode, et on utilise une anode par exemple en alliages de cuivre et de zinc dans des proportions entre le cuivre et le zinc comprises entre 72 % et 77 % atomiques de zinc, c'est-à-dire en un mélange approprié de phases gamma et epsilon à température ambiante. On adapte le bain d'électrolyse pour déposer un revêtement dont la composition est celle de la phase delta, de préférence avec 76 % de zinc dans le dépôt. Par exemple un tel bain peut contenir :
- l'eau en tant que solvant,
- 17 g par litre de cyanure de cuivre CuCN,
- 60 g par litre de cyanure de zinc Zn(CN)₂,
- 60 g par litre de cyanure de sodium NaCN,
- 60 g par litre d'hydroxyde de sodium NaOH,
- 0.4 g par litre de sulfure de sodium Na₂S, 9H₂O,
- à une température de 20 à 80 °C,
- avec une densité de courant de 1 à 10 A/dm².

L'avantage de l'électrodéposition d'un alliage cuivre-zinc est que sa composition est constante dans l'épaisseur du revêtement, contrairement à la diffusion de zinc sur un substrat de cuivre ou de laiton, qui présente un gradient de composition en l'absence de couche barrière.

Les procédés ci-dessus ont en commun de produire, dans le revêtement du fil électrode, au moins une zone en alliages cuivre - zinc dont la composition moyenne correspond à la plage d'existence de l'alliage cuivre-zinc en phase delta à l'équilibre, zone qui est ensuite portée à une température à laquelle de la phase delta est produite et reste stable, puis le fil électrode est refroidi brutalement afin de conserver la phase delta dans un état métastable à température ambiante.

Chacun des procédés ci-dessus peut comprendre une étape ultérieure de tréfilage du fil électrode pour l'amener à son diamètre final d'utilisation.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig. 1] La figure 1 est un diagramme des phases du système cuivre-zinc à l'équilibre, avec en abscisse la concentration atomique (fraction molaire) en zinc, et avec en ordonnée la température exprimée en degrés Kelvin ;
[Fig. 2] La figure 2 est une vue de côté en demie coupe longitudinale d'un fil électrode de l'art antérieur, à âme et revêtement continu, avant production d'une étincelle d'usinage d'électroérosion ;
[Fig. 3] La figure 3 est une vue de côté en demie coupe longitudinale du fil électrode de la figure 2, après production d'une étincelle d'usinage d'électroérosion ;
[Fig. 4] La figure 4 est une vue de dessus du fil électrode de la figure 3, après production d'une étincelle d'usinage d'électroérosion ;
[Fig. 5] La figure 5 est une vue de côté en demie coupe longitudinale d'un fil électrode de l'art antérieur, à âme et revêtement fracturé, avant production d'une étincelle d'usinage d'électroérosion ;
[Fig. 6] La figure 6 est une vue de côté en demie coupe longitudinale du fil électrode de la figure 5, après production d'une étincelle d'usinage d'électroérosion ;
[Fig. 7] La figure 7 est une vue de côté en demie coupe longitudinale d'un fil électrode selon un mode de réalisation de la présente invention ;
[Fig. 8] La figure 8 est une vue de côté en demie coupe longitudinale d'un fil électrode selon un autre mode de réalisation de la présente invention ; et
[Fig. 9] La figure 9 est une vue de côté en demie coupe longitudinale d'un fil électrode selon un autre mode de réalisation de la présente invention.

### DESCRIPTION DES MODES DE REALISATION PREFERES

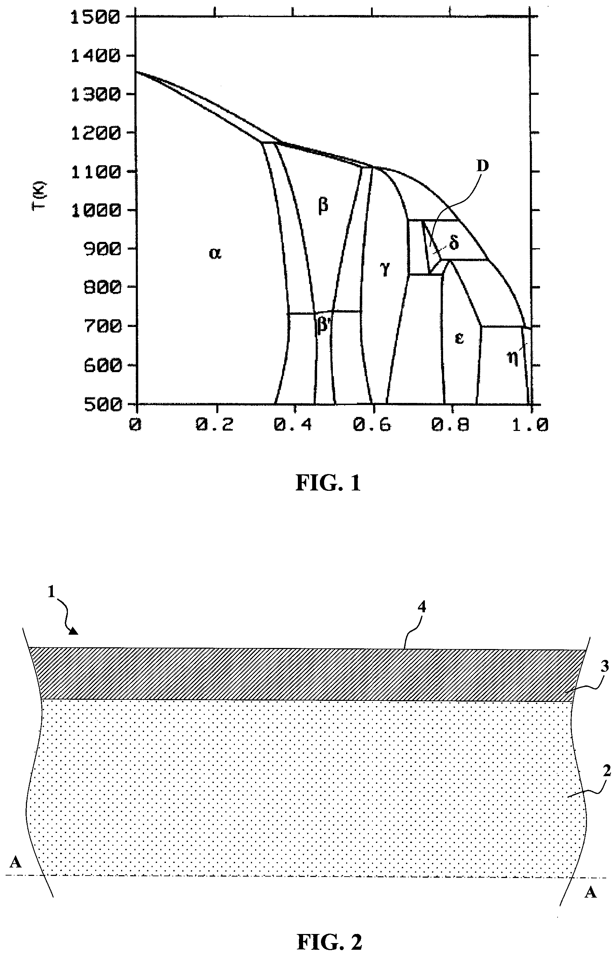

On considère tout d'abord, sur la figure 1, le diagramme des phases du système cuivre-zinc à l'équilibre.

On remarque que la phase delta est stable dans une plage D réduite dans laquelle la concentration en zinc est comprise entre 72 % et 77 % atomiques, et dans laquelle la température est comprise entre 559 °C et 700 °C.

Ainsi, dans les zones en alliage cuivre-zinc en phase delta d'un fil électrode, la teneur en zinc varie continûment en restant comprise entre 72 % et 77 % atomiques, le reste étant du cuivre, et les impuretés inévitables. La phase delta de l'alliage cuivre-zinc a une structure cristallographique particulière que l'on peut identifier par différents moyens, par exemple par diffraction X ou par diffraction de neutrons. Cette structure cristallographique particulière permet de distinguer la phase delta du système cuivre-zinc vis-à-vis d'un mélange de grains fins en laiton en phase gamma et de grains fins en laiton en phase epsilon, lequel mélange aurait la même composition globale. La structure cristallographique de la phase delta du système cuivre-zinc, dans son état stable à une température de 600 °C, a été publiée en 1971 par J. Lenz et K. Schubert dans le Zeitschrift für Metallkunde vol. 62, pages 810-816.

Les zones d'alliage de cuivre et de zinc en phase delta ne peuvent être obtenues qu'entre 559 °C et 700 °C, et doivent ensuite subir une trempe, c'est-à-dire un refroidissement brusque pour les amener de 559°C à la température ambiante en un laps de temps court, pour conserver leur structure cristalline à température ambiante. En pratique, la trempe peut être réalisée par passage du fil électrode dans de l'eau liquide, de préférence à température proche de la température ambiante, avant que la température du fil électrode descende en dessous de 559°C.

Aux températures inférieures à 559 °C, en particulier à température ambiante, les zones d'alliage de cuivre et de zinc en phase delta sont dans un état métastable. Dans un tel état métastable, la transformation de la phase delta en phase gamma est très lente, quasiment imperceptible après fabrication, dans les conditions de stockage, de transport et d'amenée des fils électrode jusque dans la zone d'usinage de la machine d'électroérosion.

Comme déjà indiqué ci-dessus, quand elles sont soumises à une étincelle d'usinage, intense et de courte durée, les zones d'alliage cuivre-zinc en phase delta produisent moins de liquide, et cela favorise l'obtention d'une grande vitesse d'usinage par électroérosion.

Il est vraisemblable que cet effet qui a été constaté résulte des propriétés physiques particulières suivantes de la phase delta du système cuivre-zinc.

Une première propriété physique est liée à l'état métastable de la phase delta du système cuivre-zinc à la température ambiante. En effet, l'enthalpie libre molaire de la phase delta est supérieure à celles de la phase gamma et de la phase epsilon, L'évaporation de la phase delta est donc potentiellement favorisée par cet excès d'énergie. La quantité de chaleur que doit dégager une étincelle pour échauffer la phase delta de 25 °C à 561 °C est inférieure à celle nécessaire pour échauffer un mélange des phases gamma et epsilon de même composition globale, entre les mêmes températures.

Une seconde propriété physique de la phase delta du système cuivre-zinc est sa décomposition de manière péritectique lorsque la température s'élève à partir de 561 °C. Cette propriété apparaît sur le diagramme des phases de la figure 1, par le trait horizontal limitant l'extrémité haute de la plage de phase delta. Cela signifie que la fusion de la phase delta, depuis l'extrémité haute de la plage de phase delta, doit s'accompagner d'un changement de phase à l'état solide pour produire la phase gamma. Or la vitesse du changement de phase à l'état solide est potentiellement limitée par la diffusion des atomes à l'état solide, diffusion qui est plus lente que la diffusion à l'état liquide. Ainsi, dans les conditions de l'étincelle d'usinage, la fusion de la phase delta est potentiellement plus lente que l'évaporation du métal. Il se produit donc une interface entre le solide et sa vapeur, sans présence significative d'un liquide entre les deux.

On a illustré sur la figure 2, de façon schématique, une section longitudinale partielle d'un fil électrode 1 à âme 2 et revêtement 3 continu, avant l'action d'une étincelle. Le revêtement présente alors une surface 4 généralement lisse, c'est-à-dire généralement cylindrique en suivant l'axe longitudinal A-A du fil électrode 1.

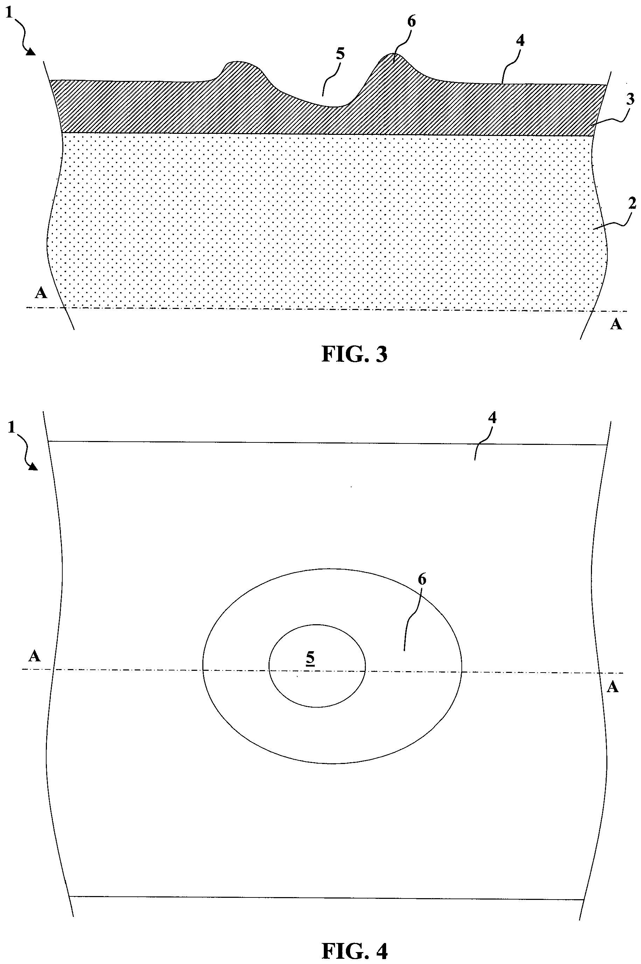

Sur la figure 3, on a illustré de façon schématique la même section longitudinale partielle de ce même fil électrode 1 à revêtement 3 continu après une étincelle d'usinage. L'étincelle a produit un cratère 5, entouré d'un bourrelet 6 de matière qui a été fondue et à nouveau solidifiée.

La figure 4 illustre schématiquement, en vue de dessus, le tronçon du fil électrode 1 avec le cratère 5 et son bourrelet 6.

On comprend que la matière qui forme le bourrelet 6 a été déplacée pendant qu'elle était à l'état liquide sous l'effet de l'échauffement dû à l'étincelle. La matière qui forme le bourrelet 6 résulte de la fusion du ou des alliages précédemment présents dans le revêtement, et la phase résultante d'alliage peut être différente de celle du ou des alliages précédemment présents, et n'a plus le même effet d'érosion lors de l'action des étincelles ultérieures dans la zone d'usinage.

La présente invention, par la présence de zones en alliage cuivre-zinc en phase delta, permet de diminuer la profondeur du cratère, ou son diamètre, ou l'épaisseur du bourrelet de matière à nouveau solidifiée. Ainsi, le fil électrode de l'invention perd moins de matière à chaque étincelle, et la matière restante en surface du fil électrode conserve mieux ses propriétés qui étaient présentes avant l'étincelle.

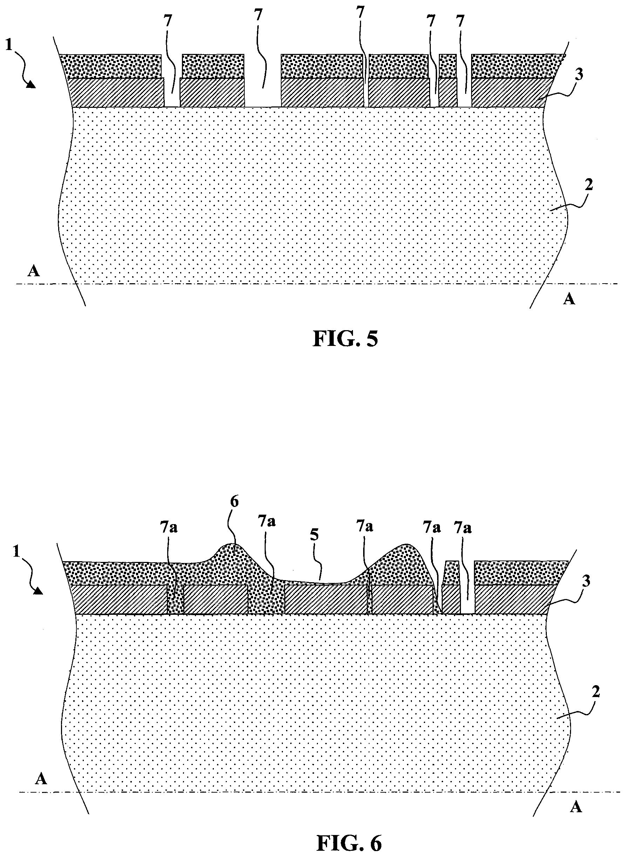

Dans le mode de réalisation illustré sur la figure 5 de façon schématique, montrant une section longitudinale partielle d'un fil électrode 1 à âme 2 et revêtement 3, avant l'action d'une étincelle, le revêtement 3 présente des fractures 7.

Sur la figure 6, on a illustré de façon schématique la même section longitudinale partielle de ce même fil électrode 1 à revêtement 3 fracturé après une étincelle d'usinage. L'étincelle a produit un cratère 5, entouré d'un bourrelet 6 de matière qui a été fondue et à nouveau solidifiée.

On comprend que la matière qui forme le bourrelet 6 a été déplacée pendant qu'elle était à l'état liquide sous l'effet de l'échauffement dû à l'étincelle, et est venue recouvrir certaines fractures ou pores 7a, de sorte que ceux-ci ne peuvent plus servir pour remplir leurs effets techniques lors des étincelles ultérieures.

La présente invention, par la présence des zones en alliage cuivre-zinc en phase delta, permet de diminuer la quantité de matière liquéfiée, et permet ainsi de mieux conserver la présence des fractures ou pores 7, qui remplissent leurs fonctions lors des étincelles ultérieures.

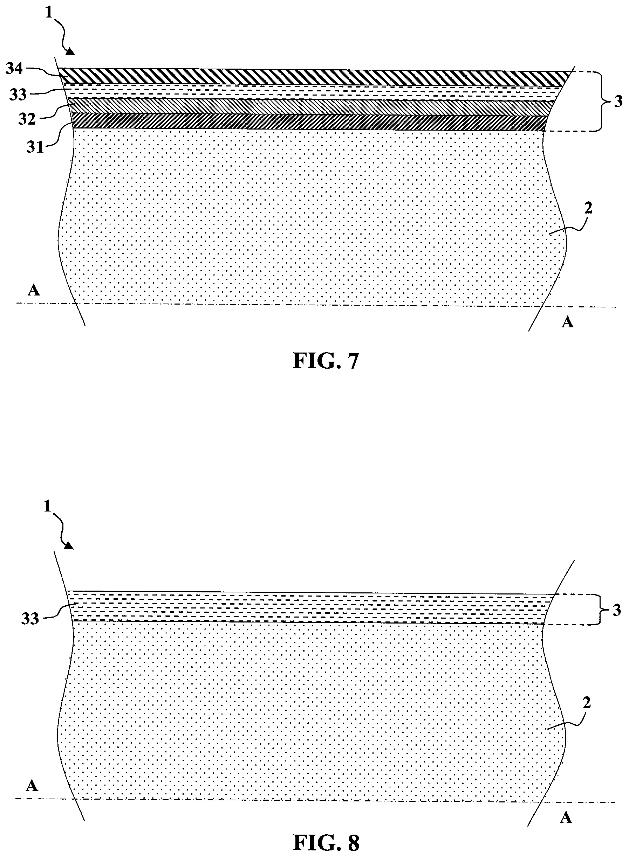

Dans le mode de réalisation illustré sur la figure 7, le revêtement 3 du fil électrode 1 comprend une couche inférieure 31 d'alliage de cuivre-zinc en phase bêta, surmontée d'une première couche intermédiaire 32 d'alliage de cuivre et de zinc en phase gamma continue, elle-même surmontée d'une seconde couche intermédiaire 33 d'alliage cuivre-zinc en phase delta, elle-même surmontée d'une couche superficielle 34 d'alliage de cuivre et de zinc en phase epsilon.

Dans le mode de réalisation illustré sur la figure 8, le revêtement 3 du fil électrode 1 comprend une seule couche 33 d'alliage cuivre-zinc en phase delta, recouvrant l'âme 2.

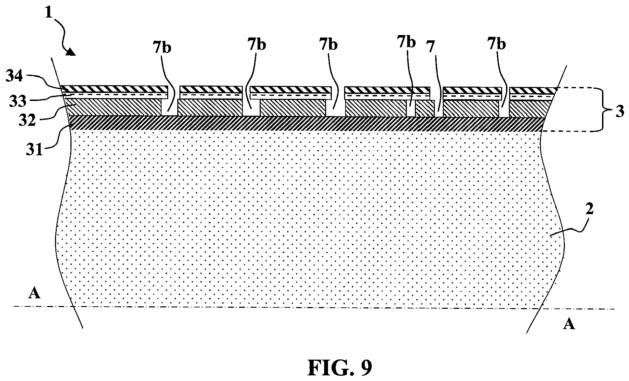

Dans le mode de réalisation illustrée sur la figure 9, le revêtement 3 du fil électrode 1 comprend une couche inférieure 31 d'alliage cuivre-zinc en phase bêta, surmontée d'une première couche intermédiaire 32 d'alliage cuivre-zinc en phase gamma fracturée, elle-même surmontée d'une seconde couche intermédiaire 33 d'alliage cuivre-zinc en phase delta, elle-même surmontée d'une couche superficielle 34 d'alliage cuivre-zinc en phase epsilon. Dans ce mode de réalisation, la seconde couche intermédiaire 33 et la couche superficielle 34 recouvre partiellement certaines fractures ou pores 7b de la première couche intermédiaire 32, formant des pores couverts. Lors d'une étincelle, la présence de zones telles que la couche 33 en alliage cuivre-zinc en phase delta réduit le risque de disparition de tels fractures ou pores couverts 7b, lesquels pores couverts 7b sont favorables pour obtenir une grande vitesse d'usinage par électroérosion avec un tel fil électrode 1.

La présente invention n'est pas limitée aux modes de réalisation qui ont été explicitement décrits, mais elle en inclut les diverses variantes et généralisations contenues dans le domaine des revendications ci-après.

## Revendications

1. - Fil électrode (1) pour usinage par électroérosion, ledit fil électrode (1) comprenant :
- une âme (2) métallique, en une ou plusieurs couches de métal ou d'alliage métallique,
- sur l'âme (2) métallique, un revêtement (3) ayant un alliage différent de celui de l'âme (2) métallique et contenant plus de 50 % en poids de zinc ,
**caractérisé en ce que** le revêtement (3) comprend de l'alliage cuivre-zinc (33) en phase delta.

2. - Fil électrode selon la revendication 1, **caractérisé en ce que** de l'alliage cuivre-zinc (33) en phase delta forme au moins une couche d'alliage dans le revêtement (3).

3. - Fil électrode selon la revendication 2, **caractérisé en ce que** ladite au moins une couche d'alliage cuivre-zinc (33) en phase delta est fracturée.

4. - Fil électrode selon l'une des revendications 2 ou 3, **caractérisé en ce que** ladite au moins une couche d'alliage cuivre-zinc (33) en phase delta est une couche superficielle du revêtement (3).

5. - Fil électrode selon l'une quelconque des revendications 2 à 4, **caractérisé en ce que** le revêtement (3) comprend une couche d'alliage cuivre-zinc (32) en phase gamma fracturée surmontée par ladite au moins une couche d'alliage cuivre-zinc (33) en phase delta.

6. - Fil électrode selon la revendication 5, **caractérisé en ce que** ladite au moins une couche d'alliage cuivre-zinc (33) en phase delta a une épaisseur comprise entre 30% et 100% de l'épaisseur de ladite couche d'alliage cuivre-zinc (32) en phase gamma fracturée.

7. - Fil électrode selon l'une des revendications 2 ou 3, **caractérisé en ce que** le revêtement (3) comprend une couche d'alliage cuivre-zinc (31) en phase bêta, surmontée par une couche d'alliage cuivre-zinc (32) en phase gamma fracturée, surmontée par ladite au moins une couche d'alliage cuivre-zinc (33) en phase delta, elle-même surmontée par une couche d'alliage cuivre-zinc (34) en phase epsilon.

8. - Fil électrode selon l'une quelconque des revendications 5 à 7, **caractérisé en ce que** la couche d'alliage cuivre-zinc (32) en phase gamma contient des pores (7a) couverts par ladite au moins une couche d'alliage cuivre-zinc (33) en phase delta.

9. - Procédé pour fabriquer un fil électrode (1) pour usinage par électroérosion, ledit fil électrode (1) comprenant une âme (2) métallique et un revêtement (3) comprenant de l'alliage cuivre-zinc (33) en phase delta, lequel procédé comprend les étapes suivantes :
(a)- prendre un fil d'ébauche en métal,
(b)- réaliser sur ce fil d'ébauche un revêtement ayant des zones dont la composition moyenne correspond à la plage (D) d'existence de l'alliage cuivre-zinc en phase delta,
(c)- porter le fil d'ébauche revêtu à une température comprise entre 559 °C et 700 °C, de préférence entre 559 °C et 600° C, température à laquelle la phase delta d'alliage cuivre-zinc est stable,
(d)- refroidir brutalement le fil d'ébauche revêtu de façon à maintenir l'alliage cuivre-zinc en phase delta (33) dans un état métastable à température ambiante,

10. - Procédé selon la revendication 9, comprenant les étapes suivantes :
- au cours de l'étape (a), choisir un fil d'ébauche ayant du cuivre en surface,
- réaliser un premier revêtement de zinc sur ce fil d'ébauche,
- réaliser un premier traitement thermique de diffusion de façon à obtenir une sous-couche d'alliage de cuivre et de zinc en phase bêta (31) et une couche externe d'alliage de cuivre et de zinc en phase gamma (32),
- réaliser un second revêtement de zinc,
- réaliser un second traitement thermique de diffusion à température inférieure à 170 °C de façon à obtenir à la surface du fil une couche externe en alliage de cuivre et de zinc en phase epsilon (34) tout en conservant les couches inférieures en alliages de cuivre de zinc en phases bêta (31) et gamma (32) préalablement réalisées,
- porter le fil à une température comprise entre 559 °C et 700 °C, de préférence entre 559 °C et 600 °C, encore de préférence entre 595 °C et 598 °C, de façon à créer une couche intermédiaire en alliage de cuivre et de zinc en phase delta (33), comprise entre la sous-couche en alliage de cuivre et de zinc en phase gamma (32) et la couche externe d'alliage de cuivre et de zinc en phase epsilon (34),
- refroidir brutalement le fil de façon à maintenir l'alliage de cuivre et de zinc en phase delta (33) dans un état métastable à température ambiante.

11. - Procédé selon la revendication 9, lequel procédé comprend les étapes suivantes :
- au cours de l'étape (a), choisir un fil d'ébauche ayant du cuivre en surface,
- tremper ce fil d'ébauche dans un bain de zinc en fusion à une température comprise entre 559 °C et 700 °C, de préférence entre 559 °C et 600 °C, encore de préférence de 600 °C, de façon à créer un revêtement en alliage de cuivre et de zinc en phase delta (33),
- refroidir brutalement le fil de façon à maintenir l'alliage de cuivre et de zinc en phase delta (33) dans un état métastable.

12. - Procédé selon la revendication 9, lequel procédé comprend les étapes suivantes :
- au cours de l'étape (a), choisir un fil d'ébauche en métal,
- déposer à la surface du fil d'ébauche une couche de nickel d'environ 5 µm d'épaisseur,
- tremper ce fil d'ébauche revêtu de nickel dans un bain en fusion ayant une teneur en zinc comprise entre 72 % et 77 % atomiques et le complément en cuivre, et laissez diffuser à une température comprise entre 559 °C et 700 °C, de préférence entre 559 °C et 600 °C, encore de préférence de 600 °C, de façon à créer un revêtement en alliage de cuivre et de zinc en phase delta (33),
- refroidir brutalement le fil de façon à maintenir l'alliage de cuivre et de zinc en phase delta (33) dans un état métastable à température ambiante.

13. - Procédé selon la revendication 9, lequel procédé comprend les étapes suivantes :
- au cours de l'étape (a), choisir un fil d'ébauche en métal,
- déposer à la surface du fil d'ébauche une couche de nickel d'environ 5 µm d'épaisseur,
- coextruder ce fil d'ébauche revêtu de nickel avec un alliage de cuivre et de zinc en phase delta, ayant une teneur en zinc comprise entre 72% et 77% atomiques et maintenu à une température comprise entre 559 °C et 700 °C, de préférence à 600 °C, de façon à créer un revêtement en alliage de cuivre et de zinc en phase delta (33) sur ce fil d'ébauche revêtu de nickel,
- refroidir brutalement le fil ainsi revêtu aussitôt après la coextrusion de façon à maintenir l'alliage de cuivre et de zinc en phase delta (33) dans un état métastable à température ambiante.

14. - Procédé selon la revendication 9, lequel procédé comprend les étapes suivantes :
- au cours de l'étape (a), choisir un fil d'ébauche (2) métallique,
- déposer à la surface du fil d'ébauche métallique (2) une couche de nickel d'environ 5 µm d'épaisseur,
- déposer sur la couche de nickel une couche de cuivre, puis une couche de zinc, dans des proportions entre le cuivre et le zinc comprises entre 72 % et 77 % atomiques de zinc, avec un excès de zinc choisi pour compenser l'évaporation inévitable d'une partie du zinc pendant l'étape ultérieure de diffusion,
- laissez diffuser à une température comprise entre 559 °C et 700 °C, de préférence entre 559 °C et 600 °C, encore de préférence de 600 °C, de façon à créer un revêtement (3) ayant une couche (33) en alliage cuivre-zinc en phase delta,
- refroidir brutalement le fil ainsi revêtu de façon à maintenir l'alliage cuivre-zinc en phase delta (33) dans un état métastable à température ambiante.

15. - Procédé selon la revendication 9, dans lequel l'étape (b) de réalisation du revêtement est effectuée par électrodéposition en phase aqueuse, en utilisant le fil d'ébauche comme cathode, et en utilisant une anode en alliages de cuivre et de zinc de composition proche de la phase delta.

16. - Procédé selon l'une quelconque des revendications 9 à 15, **caractérisé en ce qu'**il comprend une étape ultérieure de tréfilage.

## Patentansprüche

1. Elektrodendraht (1) zur Bearbeitung durch Funkenerosion, wobei besagter Elektrodendraht (1) umfasst:
- einen metallischen Kern (2), mit einer oder mehreren Schichten aus Metall oder metallischer Legierung,
- auf dem metallischen Kern (2) eine Beschichtung (3), die eine andere Legierung als die des metallischen Kerns (2) aufweist, und mehr als 50 Gew.-% Zink enthält,
**dadurch gekennzeichnet, dass** die Beschichtung (3) eine Kupfer-Zink-Legierung (33) in Delta-Phase umfasst.

2. Elektrodendraht gemäß Anspruch 1, **dadurch gekennzeichnet, dass** die Kupfer-Zink-Legierung (33) in Delta-Phase mindestens eine Schicht aus einer Legierung in der Beschichtung (3) ausbildet.

3. Elektrodendraht gemäß Anspruch 2, **dadurch gekennzeichnet, dass** die mindestens eine Schicht aus einer Kupfer-Zink-Legierung (33) in Delta-Phase rissig ist.

4. Elektrodendraht gemäß einem der Ansprüche 2 oder 3, **dadurch gekennzeichnet, dass** die mindestens eine Schicht aus einer Kupfer-Zink-Legierung (33) in Delta-Phase eine Oberflächenschicht der Beschichtung ist.

5. Elektrodendraht gemäß einem der Ansprüche 2 bis 4, **dadurch gekennzeichnet, dass** die Beschichtung (3) eine rissige Schicht aus einer Kupfer-Zink-Legierung (32) in Gamma-Phase umfasst, die durch die mindestens eine Schicht mit Kupfer-Zink-Legierung (33) in Delta-Phase überdeckt ist.

6. Elektrodendraht gemäß Anspruch 5, **dadurch gekennzeichnet, dass** die mindestens eine Schicht aus einer Kupfer-Zink-Legierung (33) in Delta-Phase eine Dicke aufweist, die zwischen 30% und 100% der Dicke der rissigen Schicht aus einer Kupfer-Zink-Legierung (32) in Gamma-Phase liegt.

7. Elektrodendraht gemäß einem der Ansprüche 2 oder 3, **dadurch gekennzeichnet, dass** die Beschichtung (3) eine Schicht aus einer Kupfer-Zink-Legierung (31) in Beta-Phase umfasst, die durch eine rissige aus einer Schicht Kupfer-Zink-Legierung (32) in Gamma-Phase überdeckt ist, die durch die mindestens eine Schicht aus einer Kupfer-Zink-Legierung (33) in Delta-Phase überdeckt ist, die selbst durch eine Schicht aus einer Kupfer-Zink-Legierung (34) in Epsilon-Phase überdeckt ist.

8. Elektrodendraht gemäß einem der Ansprüche 5 bis 7, **dadurch gekennzeichnet, dass** die Schicht aus einer Kupfer-Zink-Legierung (32) in Gamma-Phase Poren (7a) enthält, die durch die mindestens eine Schicht aus einer Kupfer-Zink-Legierung (33) in Delta-Phase bedeckt sind.

9. Verfahren zur Herstellung eines Elektrodendrahts (1) zur Verwendung in der Funkenerosion, wobei besagter Elektrodendraht (1) einen metallischen Kern (2) und eine Beschichtung (3) aus einer Kupfer-Zink-Legierung (33) in Delta-Phase umfasst, wobei das Verfahren die folgenden Schritte umfasst:
(a) Hernehmen eines Drahtrohlings aus Metall,
(b) Realisieren einer Beschichtung auf dem Drahtrohling, die Zonen aufweist, deren mittlere Zusammensetzung mit dem Bereich (D), in dem die Kupfer-Zink-Legierung in Delta-Phase vorhanden ist, korrespondiert,
(c) Bringen des beschichteten Drahtrohlings auf eine Temperatur zwischen 559°C und 700°C, vorzugsweise zwischen 559°C und 600°C, einer Temperatur, bei der die Delta-Phase der Kupfer-Zink-Legierung stabil ist,
(d) plötzliches Abkühlen des beschichteten Drahtrohlings derart, dass die Kupfer-Zink-Legierung (33) in Delta-Phase in einem metastabilen Zustand bei Umgebungstemperatur aufrechterhalten wird.

10. Verfahren gemäß Anspruch 9, umfassend die folgenden Schritte:
- im Verlauf des Schritts (a), Wählen eines Drahtrohlings, der Kupfer auf der Oberfläche aufweist,
- Realisieren einer ersten Beschichtung aus Zink auf diesem Drahtrohling,
- Realisieren einer ersten thermischen Diffusionsbehandlung derart, um eine Unterschicht aus einer Legierung (31) aus Kupfer und aus Zink in Beta-Phase und eine äußere Schicht aus einer Legierung aus Kupfer und aus Zink in Gamma-Phase (32) zu erhalten,
- Realisieren einer zweiten Beschichtung aus Zink,
- Realisieren einer zweiten thermischen Diffusionsbehandlung bei einer Temperatur niedriger als 170°C derart, um auf der Oberfläche des Drahtes eine äußere Schicht einer Legierung aus Kupfer und aus Zink in Epsilon-Phase (34) zu erhalten, unter Erhalt der darunterliegenden, vorab realisierten Schichten aus einer Legierung aus Kupfer und aus Zink in Beta (31)- und Gamma (32)-Phase,
- Bringen des Drahtes derart auf eine Temperatur zwischen 559°C und 700°C, vorzugsweise zwischen 559°C und 600°C, weiter vorzugsweise zwischen 595°C und 598°C, um eine Zwischenschicht einer Legierung aus Kupfer und aus Zink in Delta-Phase (33) zu erzeugen, die zwischen der Unterschicht aus einer Legierung aus Kupfer und aus Zink in Gamma-Phase (32) und der äußeren Schicht aus einer Legierung aus Kupfer und aus Zink in Epsilon-Phase (34) liegt,
- plötzliches Abkühlen des Drahtes derart, dass die Legierung aus Kupfer und aus Zink in Delta-Phase (33) in einem metastabilen Zustand bei Umgebungstemperatur aufrechterhalten wird.

11. Verfahren gemäß Anspruch 9, wobei das Verfahren die folgenden Schritte umfasst:
- im Verlauf des Schritts (a), Wählen eines Drahtrohlings, der Kupfer auf der Oberfläche aufweist,
- Härten des Drahtrohlings in einem Bad aus geschmolzenem Zink bei einer Temperatur zwischen 559°C und 700°C, vorzugsweise zwischen 559°C und 600°C, weiter vorzugsweise bei 600°C, derart um eine Beschichtung einer Legierung aus Kupfer und aus Zink in Delta-Phase (33) zu erzeugen,
- plötzliches Abkühlen des Drahtes derart, dass die Legierung aus Kupfer und aus Zink in Delta-Phase (33) in einem metastabilen Zustand aufrechterhalten wird.

12. Verfahren gemäß Anspruch 9, wobei das Verfahren die folgenden Schritte umfasst:
- im Verlauf des Schritts (a), Wählen eines Drahtrohlings aus Metall,
- Aufbringen einer Schicht aus Nickel mit einer Dicke von ungefähr 5 µm auf der Oberfläche des Drahtrohlings,
- Härten diesen mit Nickel beschichteten Drahtrohlings in einem Schmelzbad Bad, das einen Zinkgehalt zwischen 72% und 77% Atomprozent und den ergänzenden Kupfergehalt aufweist, und Diffundieren lassen bei einer Temperatur zwischen 559°C und 700°C, vorzugsweise zwischen 559°C und 600°C, weiter vorzugsweise bei 600°C derart, um eine Beschichtung einer Legierung aus Kupfer und aus Zink in Delta-Phase (33) zu erzeugen,
- plötzliches Abkühlen des Drahtes derart, dass die Legierung aus Kupfer und aus Zink in Delta-Phase (33) in einem metastabilen Zustand bei Umgebungstemperatur aufrechterhalten wird.

13. Verfahren gemäß Anspruch 9, wobei das Verfahren die folgenden Schritte umfasst:
- im Verlauf des Schritts (a), Wählen eines Drahtrohlings aus Metall,
- Aufbringen einer Schicht aus Nickel mit einer Dicke von ungefähr 5 µm auf der Oberfläche des Drahtrohlings,
- Koextrudieren des mit Nickel beschichteten Drahtrohlings mit einer Legierung aus Kupfer und aus Zink in Delta-Phase, die einen Zinkgehalt zwischen 72% und 77% Atomprozent aufweist und bei einer Temperatur zwischen 559°C und 700°C, vorzugsweise bei 600°C gehalten wird, um eine Beschichtung einer Legierung aus Kupfer und aus Zink in Delta-Phase (33) auf dem mit Nickel beschichteten Drahtrohling zu erzeugen,
- plötzliches Abkühlen des so beschichteten Drahtes sofort nach dem Koextrudieren derart, dass die Legierung aus Kupfer und aus Zink in Delta-Phase (33) in einem metastabilen Zustand bei Umgebungstemperatur aufrechterhalten wird.

14. Verfahren gemäß Anspruch 9, wobei das Verfahren die folgenden Schritte umfasst:
- im Verlauf des Schritts (a), Wählen eines metallischen Drahtrohlings (2),
- Aufbringen einer Schicht aus Nickel mit einer Dicke von ungefähr 5µm auf der Oberfläche des metallischen Drahtrohlings (2),
- Abscheiden einer Schicht aus Kupfer auf der Schicht aus Nickel, dann einer Schicht aus Zink, worin das Verhältnis zwischen dem Kupfer und dem Zink zwischen 72% und 77% Atomprozent Zinkt liegt, mit einem gewählten Überschuss an Zink, wobei ein Überschuss mit Zink gewählt wird, um die unvermeidliche Verdampfung eines Teils des Zinks während des nachfolgenden Diffusionsschrittes zu kompensieren,
- Diffundieren lassen bei einer Temperatur zwischen 559°C und 700°C, vorzugsweise zwischen 559°C und 600°C, weiter vorzugsweise bei 600°C derart, um eine Beschichtung (3), aufweisend eine Schicht (33) aus einer Kupfer-Zink-Legierung in Delta-Phase zu erzeugen,
- plötzliches Abkühlen des so beschichteten Drahtes derart, dass die Kupfer-Zink-Legierung in Delta-Phase (33) in einem metastabilen Zustand bei Umgebungstemperatur aufrechterhalten wird.

15. Verfahren gemäß Anspruch 9, wobei der Schritt (b) der Realisierung der Beschichtung durch Galvanisieren in wässriger Phase ausgeführt ist, unter Verwendung des Drahtrohlings als Kathode und unter Verwendung einer Anode aus einer Legierung aus Kupfer und aus Zink mit einer Zusammensetzung nahe der Delta-Phase.

16. Verfahren gemäß einem der Ansprüche 9 bis 15, **dadurch gekennzeichnet, dass** es einen nachfolgenden Schritt des Drahtziehens umfasst.

## Claims

1. 1 - An electrode wire (1) for machining by electrical discharge machining, said electrode wire (1) comprising:
- a metallic core (2), made of one or more layers of metal or of metallic alloy,
- on the metallic core (2), a coating (3) having an alloy different from that of the metallic core (2) and containing more than 50% by weight of zinc,
**characterized in that** the coating (3) comprises delta-phase copper-zinc alloy (33).

2. 2 - The electrode wire as claimed in claim 1, **characterized in that** delta-phase copper-zinc alloy (33) forms at least one layer of alloy in the coating (3).

3. 3 - The electrode wire as claimed in claim 2, **characterized in that** said at least one layer of delta-phase copper-zinc alloy (33) is fractured.

4. 4 - The electrode wire as claimed in either of claims 2 and 3, **characterized in that** said at least one layer of delta-phase copper-zinc alloy (33) is a surface layer of the coating (3).

5. 5 - The electrode wire as claimed in any one of claims 2 to 4, **characterized in that** the coating (3) comprises a fractured layer of gamma-phase copper-zinc alloy (32) surmounted by said at least one layer of delta-phase copper-zinc alloy (33).

6. 6 - The electrode wire as claimed in claim 5, **characterized in that** said at least one layer of delta-phase copper-zinc alloy (33) has a thickness of between 30% and 100% of the thickness of said fractured layer of gamma-phase copper-zinc alloy (32).

7. 7 - The electrode wire as claimed in either of claims 2 and 3, **characterized in that** the coating (3) comprises a layer of beta-phase copper-zinc alloy (31), surmounted by a fractured layer of gamma-phase copper-zinc alloy (32), surmounted by said at least one layer of delta-phase copper-zinc alloy (33), itself surmounted by a layer of epsilon-phase copper-zinc alloy (34).

8. 8 - The electrode wire as claimed in any one of claims 5 to 7, **characterized in that** the layer of gamma-phase copper-zinc alloy (32) contains pores (7a) which are covered by said at least one layer of delta-phase copper-zinc alloy (33).

9. 9 - A process for manufacturing an electrode wire (1) for machining by electrical discharge machining, said electrode wire (1) comprising a metallic core (2) and a coating (3) comprising delta-phase copper-zinc alloy (33), which process comprises the following stages:
(a) - taking a blank wire made of metal,
(b) - producing, on this blank wire, a coating having zones, the mean composition of which corresponds to the range (D) of existence of the delta-phase copper-zinc alloy,
(c) - bringing the coated blank wire to a temperature of between 559°C and 700°C, preferably between 559°C and 600°C, at which temperature the copper-zinc alloy delta phase is stable,
(d) - suddenly cooling the coated blank wire so as to keep the delta-phase copper-zinc alloy (33) in a metastable state at ambient temperature.

10. 10 - The process as claimed in claim 9, comprising the following stages:
- during stage (a), choosing a blank wire having copper on the surface,
- producing a first coating of zinc on this blank wire,
- carrying out a first diffusion heat treatment so as to obtain a sub-layer of beta-phase copper and zinc alloy (31) and an external layer of gamma-phase copper and zinc alloy (32),
- producing a second coating of zinc,
- carrying out a second diffusion heat treatment at a temperature of less than 170°C so as to obtain, at the surface of the wire, an external layer made of epsilon-phase copper and zinc alloy (34) while retaining the lower layers made of beta-phase copper-zinc alloy (31) and gamma-phase copper-zinc alloy (32) previously produced,
- bringing the wire to a temperature of between 559°C and 700°C, preferably between 559°C and 600°C, more preferably between 595°C and 598°C, so as to create an intermediate layer made of delta-phase copper and zinc alloy (33), between the sub-layer made of gamma-phase copper and zinc alloy (32) and the external layer of epsilon-phase copper and zinc alloy (34),
- suddenly cooling the wire so as to keep the delta-phase copper and zinc alloy (33) in a metastable state at ambient temperature.

11. 11 - The process as claimed in claim 9, which process comprises the following stages:
- during stage (a), choosing a blank wire having copper on the surface,
- dipping this blank wire in a bath of molten zinc at a temperature of between 559°C and 700°C, preferably between 559°C and 600°C, more preferably 600°C, so as to create a coating made of delta-phase copper and zinc alloy (33),
- suddenly cooling the wire so as to keep the delta-phase copper and zinc alloy (33) in a metastable state.

12. 12 - The process as claimed in claim 9, which process comprises the following stages:
- during stage (a), choosing a blank wire made of metal,
- depositing, at the surface of the blank wire, a layer of nickel with a thickness of approximately 5 µm,
- dipping this nickel-coated blank wire in a molten bath having a zinc content of between 72 and 77 atomic percent and the remainder as copper, and allowing to diffuse at a temperature of between 559°C and 700°C, preferably between 559°C and 600°C, more preferably 600°C, so as to create a coating made of delta-phase copper and zinc alloy (33),
- suddenly cooling the wire so as to keep the delta-phase copper and zinc alloy (33) in a metastable state at ambient temperature.

13. 13 - The process as claimed in claim 9, which process comprises the following stages:
- during stage (a), choosing a blank wire made of metal,
- depositing, at the surface of the blank wire, a layer of nickel with a thickness of approximately 5 µm,
- coextruding this nickel-coated blank wire with a delta-phase copper and zinc alloy having a zinc content of between 72 and 77 atomic percent and kept at a temperature of between 559°C and 700°C, preferably at 600°C, so as to create a coating made of delta-phase copper and zinc alloy (33) on this nickel-coated blank wire,
- suddenly cooling the wire thus coated immediately after the coextrusion, so as to keep the delta-phase copper and zinc alloy (33) in a metastable state at ambient temperature.

14. 14 - The process as claimed in claim 9, which process comprises the following stages:
- during stage (a), choosing a metallic blank wire (2),
- depositing, at the surface of the metallic blank wire (2), a layer of nickel with a thickness of approximately 5 µm,
- depositing, on the layer of nickel, a layer of copper and then a layer of zinc, in proportions between the copper and the zinc of between 72 and 77 atomic percent of zinc, with an excess of zinc chosen in order to compensate for the unavoidable evaporation of a part of the zinc during the subsequent diffusion stage,
- allowing to diffuse at a temperature of between 559°C and 700°C, preferably between 559°C and 600°C, more preferably 600°C, so as to create a coating (3) having a layer (33) made of delta-phase copper-zinc alloy,
- suddenly cooling the wire thus coated so as to keep the delta-phase copper-zinc alloy (33) in a metastable state at ambient temperature.

15. 15 - The process as claimed in claim 9, in which stage (b) of producing the coating is carried out by aqueous-phase electrodeposition, using the blank wire as cathode, and using an anode made of copper and zinc alloys with a composition close to the delta phase.

16. 16 - The process as claimed in any one of claims 9 to 15, **characterized in that** it comprises a subsequent stage of drawing.
